# DEMANDE DE BREVET EUROPEEN

(11) **EP 3 321 063 A1**
(43) Date de publication de la demande: **16.05.2018**
(21) Numéro de dépôt: 17201377.3
(22) Date de dépôt: 13.11.2017
(51) Int. Cl.: B29C 51/02, B41M 5/00, B41M 7/00

(54) **PROCÉDÉ ET DISPOSITIF DE THERMOFORMAGE ET D'IMPRESSION INTEGRÉE**

(30) Priorité: 14.11.2016 FR 1660943
(71) Demandeur: C.G.L. Pack Service, 74370 Epagny Metz-Tessy (FR)
(72) Inventeur: MILHOMME, Didier, 74150 RUMILLY (FR); RIVAL, Jean-Luc, 73340 LA MOTTE EN BAUGES (FR)
(74) Mandataire: Cabinet Poncet

(57) **Abrégé**

L'invention concerne un procédé et un dispositif de thermoformage et de décoration pour réaliser une barquette (100) thermoformée décorée, dans lesquels la décoration est réalisée par un module d'impression (5) muni d'au moins une tête d'impression (2), prévu en amont d'un module de thermoformage (6) et directement intégré sur une ligne de thermoformage.

## Description

La présente invention concerne le domaine du thermoformage.

Le thermoformage est une technique bien connue qui consiste à prendre un matériau sous forme de plaque, par exemple du verre ou du plastique, à le chauffer pour le ramollir, à le mettre en forme sous pression contre un moule et à le laisser refroidir pour obtenir une forme désirée.

Dans le cas du thermoformage de matière plastique, le matériau utilisé se présente le plus souvent sous forme de bande continue, conditionnée en bobine, et dont l'épaisseur avant thermoformage est généralement inférieure à deux millimètres.

Les polymères les plus couramment utilisés pour un thermoformage de matière plastique sont les suivants : polystyrène (PS), polyéthylène (PE), polypropylène (PP), polychlorure de vinyle (PVC), polyéthylène téréphtalate (PET), ou encore le polyéthylène téréphtalate glycolisé (PETg).

De façon habituelle, les dispositifs de thermoformage comprennent :
- une réserve de matériau à thermoformer, habituellement sous forme de bobine,
- un module de chauffage du matériau à thermoformer, et
- un module de mise en forme sur un moule du matériau à thermoformer.

La présente invention concerne encore plus particulièrement le thermoformage et la décoration dans le but de fabriquer des pièces thermoformées décorées.

On connaît déjà deux types de décoration. Le premier type de décoration connu concerne la décoration du matériau thermoformable, et le second type de décoration connu concerne la décoration des pièces déjà thermoformées.

Pour décorer directement les feuilles de matériau thermoformable, on connait déjà la décoration de type flexographie ou héliographie. Il s'agit d'une impression directement sur la feuille de matériau thermoformable préalablement aux opérations de thermoformage habituelles.

De telles méthodes de décoration requièrent des équipements qui nécessitent des investissements lourds qui ne deviennent rentables que pour des grandes séries de fabrication. De plus, les thermoformeurs ne sont pas équipés de tels équipements mettant en oeuvre ces méthodes de décoration. Cela nécessite que la partie décoration soit externalisée ce qui augmente le coût des pièces thermoformées.

De plus, ces méthodes sont incompatibles pour être intégrées directement dans une ligne de thermoformage car elles nécessitent un temps de séchage des motifs décorés tel, que cela induirait un allongement considérable du temps de fabrication et de l'encombrement de la ligne de thermoformage.

Pour décorer directement les pièces préalablement thermoformées, on connait déjà la décoration par impression numérique à jet d'encre.

Cette méthode est moins coûteuse et plus flexible que la décoration par flexographie ou héliographie. Toutefois, elle n'est pas non plus réalisable par les thermoformeurs car ils ne sont pas équipés des équipements nécessaires pour réaliser ce type de décoration, par manque de place et de moyens. Ainsi, les pièces réalisées ont un coût de fabrication élevé.

L'impression numérique par jets d'encre requiert un positionnement précis de la matière, ce qui est compliqué lorsque la matière est une pièce en volume. En outre, les orientations multiples des faces d'une pièce en volume nécessitent d'augmenter le nombre de têtes d'impression, ce qui augmente le coût.

On connaît également du document US 2005/212181 A1 un procédé de thermoformage et de décoration comprenant une étape d'approvisionnement pour fournir un matériau thermoformable en feuilles, une étape de thermoformage, une étape d'impression numérique par jet d'encre sur une face du matériau thermoformable en feuilles, et une étape ultérieure de thermoformage des feuilles du matériau thermoformable. Le document décrit également un dispositif de thermoformage et de décoration comprenant un module d'approvisionnement pour délivrer le matériau thermoformable en feuilles, un module de thermoformage, et un module d'impression numérique à jet d'encre. Les feuilles de matériau thermoformées et décorées sont ensuite collées sur un substrat en mousse pour réaliser des éléments de panneaux intérieurs de véhicules automobiles. Il s'agit a priori de pièces de grandes dimensions.

Un premier problème proposé par la présente invention est de concevoir un procédé de thermoformage permettant de réaliser des pièces thermoformées décorées, facile à mettre en oeuvre à moindre coût directement chez des thermoformeurs.

Un second problème proposé par la présente invention est de concevoir un procédé de thermoformage qui garantisse une bonne qualité du décor imprimé, en sortie du thermoformage.

Un troisième problème proposé par la présente invention est de concevoir un procédé pouvant être intégré directement sur la ligne de thermoformage sans ralentir la cadence de thermoformage, en particulier pour les pièces de grandes surfaces.

Un quatrième problème proposé par la présente invention est de concevoir un dispositif de thermoformage permettant de réaliser des pièces thermoformées décorées, qui soit peu encombrant et aisément accessible pour la maintenance.

Un cinquième problème proposé par la présente invention est de concevoir un dispositif de thermoformage qui intègre un module d'impression en amont du module de thermoformage, sans que l'activation ou l'inactivation du module d'impression affecte le fonctionnement du module de thermoformage.

Un sixième problème proposé par la présente invention est de concevoir un dispositif de thermoformage qui garantisse une bonne qualité du décor imprimé, en sortie du thermoformage.

Pour atteindre ces objets ainsi que d'autres, l'invention propose, selon un premier aspect, un procédé de thermoformage et de décoration, comprenant les étapes suivantes :
- une étape d'approvisionnement consistant à fournir le matériau thermoformable,
- une étape d'impression consistant à réaliser une impression numérique par jet(s) d'encre sur une première face du matériau thermoformable, après l'étape d'approvisionnement, l'encre étant adaptée pour être réticulée par irradiation d'ultraviolets (UV),
- une étape ultérieure de thermoformage consistant à former à chaud le matériau thermoformable imprimé,
et dans lequel :
- lors de l'étape d'approvisionnement, le matériau thermoformable est fourni sous forme d'une bande continue de matériau thermoformable,
- lors de l'étape d'impression, on retient immobile un tronçon de la bande de matériau thermoformable comprenant une zone d'impression destinée à porter la totalité du décor, et
- on projette au moins un jet d'encre en direction de la zone d'impression sur la première face du tronçon de bande de matériau thermoformable, en déplaçant le jet d'encre selon un balayage dans une première direction et une seconde direction, de façon à réaliser la totalité du décor.

Un tel procédé permet de réaliser la décoration de matériau thermoformable entre deux étapes habituelles du thermoformage, à savoir l'étape d'approvisionnement et l'étape de thermoformage. Cette étape supplémentaire peut être facilement intégrée par les thermoformeurs, sans modification trop contraignante des procédés habituels de thermoformage, et sans ralentir la cadence du thermoformage. En effet, la forme en bande du matériau thermoformable facilite considérablement le déplacement du matériau entre les différents postes de traitement, depuis l'étape d'approvisionnement jusqu'à l'étape de thermoformage, puisqu'il suffit de guider la bande de matériau sur des guides qui assurent naturellement le maintien de la bande selon des tronçons successifs où se trouvent les différents postes de traitement. Par ailleurs, l'impression numérique avec balayage dans deux directions simplifie les moyens d'entraînement de la bande de matériau thermoformable, et permet de réaliser la totalité du décor selon une surface suffisante pour couvrir l'objet thermoformé à réaliser. Enfin, l'impression effectuée sur un tronçon immobile et généralement plan de la bande de matériau thermoformable garantit une impression de bonne qualité et permet de réaliser l'impression elle-même selon un encombrement réduit et à moindre coût en garantissant une distance maîtrisée entre les moyens d'impression par jet d'encre et la surface de la zone d'impression.

Les coûts de production sont donc significativement diminués par rapport aux procédés de décoration connus qui eux nécessitent une décoration hors site de thermoformage.

On pourra avantageusement prévoir que la première direction de balayage est transversale par rapport à la direction longitudinale dudit tronçon de bande de matériau thermoformable, et que la seconde direction de balayage est longitudinale, parallèle à la direction longitudinale dudit tronçon de bande de matériau thermoformable.

En pratique, pour réaliser l'impression d'une zone d'impression souhaitée du matériau thermoformable, après un balayage complet dans la première direction, ledit au moins un jet d'encre est déplacé par balayage d'un pas dans la seconde direction, puis on exécute le balayage suivant dans la première direction, et on répète l'opération jusqu'à parcourir toute la zone d'impression souhaitée du matériau thermoformable.

L'étape d'impression est adaptée pour que le motif imprimé ne se détériore pas au cours du thermoformage.

Avantageusement, l'encre présente une capacité d'élongation d'au moins environ 50 % lors du thermoformage. Cette capacité d'élongation pourra être avantageusement supérieure à environ 100 %.

On peut avantageusement prévoir que le procédé de thermoformage et de décoration comprend en outre une étape de prétraitement consistant à mettre en oeuvre un traitement Corona ou un traitement par plasma atmosphérique sur ladite première face de la bande de matériau thermoformable, après l'étape d'approvisionnement et avant l'étape d'impression.

De tels prétraitements permettent de préparer la surface sur laquelle l'impression doit être effectuée, afin d'améliorer l'accroche de l'encre sur la surface de matériau thermoformable, ce qui améliorera la qualité finale de la pièce thermoformée. Cela évite que des craquelures n'apparaissent dans l'encre, ce qui amoindrirait le rendu esthétique des pièces finies.

De façon avantageuse, on peut prévoir en outre une étape de préimpression consistant à imprimer du blanc ou une couleur unique sur ladite première face de la bande de matériau thermoformable, avant l'étape d'impression.

Le rendu de l'impression est amélioré surtout lorsque l'impression est réalisée sur un matériau transparent. Cette couche d'encre constitue une sous-couche support de couleurs.

On peut avantageusement prévoir que le procédé de thermoformage et de décoration comprend en outre une première étape de réticulation consistant à réticuler l'encre déposée sur ladite première face du matériau thermoformable, entre l'étape de préimpression et l'étape d'impression.

Ainsi, l'encre est rapidement fixée et, le cas échéant, supportera d'autant mieux le thermoformage (température élevée et déformation mécanique).

Avantageusement, on peut prévoir que le procédé de thermoformage et de décoration comprend en outre une seconde étape de réticulation consistant à réticuler l'encre déposée sur la bande de matériau thermoformable, entre l'étape d'impression et l'étape de thermoformage.

Ainsi, l'encre est rapidement fixée et supportera d'autant mieux le thermoformage (température élevée et déformation mécanique).

Il est particulièrement avantageux de prévoir que :
- pendant l'étape d'impression, le tronçon de bande de matériau thermoformable comprenant la zone d'impression est orienté selon une direction ascendante ou descendante,
- pendant l'étape d'impression, on projette l'encre contre la zone d'impression dudit tronçon de bande de matériau thermoformable bloqué momentanément en position fixe.

Le dispositif présente ainsi un encombrement horizontal diminué, compatible avec les nécessités d'encombrement réduit des lignes de fabrication de produits thermoformés. En outre, les moyens d'impression restent à hauteur réduite, et donc aisément accessibles pour la maintenance.

Lors de l'étape ultérieure de thermoformage, il est nécessaire de positionner le décor de façon précise par rapport à la forme générale de l'objet à réaliser. Pour garantir un positionnement correct, il est avantageux que, pendant l'étape d'impression, on imprime en outre sur la bande de matériau thermoformable un ou plusieurs repères dont la position relative est définie par rapport à la zone d'impression.

Ainsi, pendant l'étape ultérieure de thermoformage, pour positionner dans un module de thermoformage le tronçon de bande de matériau thermoformable comprenant la zone d'impression, on place dans le module de thermoformage lesdits un ou plusieurs repères dont la position relative est définie par rapport à la zone d'impression.

Selon un second aspect, l'invention propose un dispositif de thermoformage et de décoration comprenant :
- un module d'approvisionnement de matériau thermoformable, pour délivrer une bande du matériau thermoformable,
- un module de thermoformage adapté pour thermoformer des tronçons de la bande de matériau thermoformable,
- entre le module d'approvisionnement et le module de thermoformage, un module d'impression numérique par jet d'encre conformé pour projeter de l'encre sur une zone d'impression d'une première face d'un tronçon de la bande de matériau thermoformable, l'encre étant adaptée pour être réticulée par irradiation d'ultraviolets,
- des moyens de blocage pour maintenir immobile, pendant une étape d'impression, ledit tronçon de bande de matériau thermoformable,
- des moyens de balayage pour déplacer le module d'impression numérique selon un balayage en deux directions définissant une zone d'impression sur le tronçon de bande de matériau thermoformable.

Un tel dispositif est implantable facilement chez les thermoformeurs et propose une solution alternative plus performante et significativement moins onéreuse que les dispositifs connus jusqu'à ce jour, qui eux ne sont pas adaptés pour être intégrés directement sur une ligne de thermoformage car ils ralentiraient la cadence du thermoformage ou augmenteraient l'encombrement du dispositif de thermoformage.

De plus, le module d'impression est adapté pour que le décor ne soit pas détérioré au cours du thermoformage.

Avantageusement, on peut prévoir que le module d'impression comprend quatre têtes d'impression par jet d'encre, chacune étant conformée pour imprimer du blanc ou une couleur sur une première face du matériau thermoformable.

Ainsi, de nombreuses couleurs sont à disposition pour réaliser le motif à imprimer.

Avantageusement, on peut prévoir que le dispositif comprend en outre, en amont du module d'impression et en aval du module d'approvisionnement de matériau thermoformable, un module de prétraitement adapté pour préparer la surface de ladite première face du matériau thermoformable par un traitement Corona ou un traitement par plasma atmosphérique appliqué sur ladite première face du matériau thermoformable.

Un traitement Corona est particulièrement adapté lorsque le matériau thermoformable est du polypropylène (PP) ou du polyéthylène téréphtalate glycolisé (PETg), et le traitement par plasma atmosphérique est particulièrement adapté lorsque le matériau thermoformable est du polyéthylène téréphtalate (PET).

On peut avantageusement prévoir que le dispositif comprend en outre un module de préimpression, en amont du module d'impression, comprenant au moins une tête d'impression par jet d'encre conformée pour imprimer du blanc ou une couleur sur ladite première face du matériau thermoformable.

Le rendu de l'impression est amélioré surtout lorsque l'impression est réalisée sur un matériau transparent. Cette couche d'encre constitue une sous-couche support de couleurs.

Avantageusement, on peut prévoir que le dispositif comprend en outre un premier module de réticulation, entre le module de préimpression et le module d'impression, avantageusement par irradiation d'ultraviolets, permettant de réticuler l'encre déposée sur ladite première face du matériau thermoformable.

Ainsi, l'encre d'impression est rapidement fixée et supportera d'autant mieux le thermoformage (température élevée et déformation mécanique).

De façon avantageuse, on peut prévoir que le dispositif comprend en outre un second module de réticulation permettant de réticuler l'encre déposée sur ladite première face du matériau thermoformable, entre le module d'impression et le module de thermoformage.

Ainsi, l'encre d'impression est rapidement fixée et supportera d'autant mieux le thermoformage (température élevée et déformation mécanique).

De façon avantageuse, le module de prétraitement, le module de préimpression, le premier module de réticulation et le second module de réticulation peuvent être solidaires du module d'impression, et l'ensemble peut opérer un balayage simultané du matériau thermoformable dans une zone d'impression dudit matériau.

Une telle configuration améliore le rendement économique du dispositif de thermoformage, grâce à une réduction substantielle du coût de réalisation.

Avantageusement, on peut prévoir que le dispositif est conformé pour déplacer et bloquer la bande de matériau thermoformable selon au moins un tronçon ascendant ou descendant, le module d'impression projetant l'encre contre ladite première face dudit tronçon de bande de matériau thermoformable bloqué momentanément en position fixe.

Le dispositif présente ainsi un encombrement horizontal diminué. En outre, le module d'impression reste à hauteur réduite, et donc aisément accessible pour la maintenance.

On peut avantageusement prévoir que le dispositif est conformé pour déplacer et bloquer la bande de matériau thermoformable selon au moins un tronçon ascendant et un tronçon descendant, le module d'impression projetant l'encre soit contre ladite première face dudit tronçon ascendant de bande de matériau thermoformable bloqué momentanément en position fixe, soit contre la face opposée dudit tronçon descendant de bande de matériau thermoformable bloqué momentanément en position fixe.

Un tel dispositif est compact et permet, par de simples translations du module d'impression, de décorer la face supérieure et/ou la face inférieure du matériau thermoformable.

On peut ainsi imprimer l'une ou l'autre des faces de matériau à thermoformer, ce qui permet l'utilisation de tous types de moules y compris des moules négatifs en bas, ce qui permet en particulier de déposer l'encre sur la face extérieure d'une barquette alimentaire dont les moules de thermoformage sont de façon répandue majoritairement négatifs vers le bas, c'est-à-dire à concavité tournée vers le haut et recevant la matière à thermoformer.

Avantageusement, on peut prévoir que la face de matériau thermoformable sur laquelle l'impression est réalisée est constituée de polyéthylène téréphtalate glycolisé (PETg) ou d'un mélange PET/PETg. La présence du PETg favorise l'impression.

L'avantage d'un mélange PET/PETg permet de diminuer les coûts car le PETg est cher, et permet également de limiter les effets perturbants du PETg dans le recyclage des produits thermoformés. On pourra préférer un mélange dans lequel la proportion de PETg est comprise entre 5% et 10%.

Le module de thermoformage peut avantageusement comprendre un ou plusieurs capteurs de position qui permettent de détecter la position du ou des repères de la zone d'impression sur la bande de matériau thermoformable, et des moyens pour positionner dans le moule de thermoformage le tronçon de bande de matériau thermoformable comprenant ladite zone d'impression en fonction des informations fournies par le ou les capteurs de position.

D'autres objets, caractéristiques et avantages de la présente invention ressortiront de la description suivante de modes de réalisation particuliers, faite en relation avec les figures jointes, parmi lesquelles :
- la figure 1 est une vue schématique d'un procédé de thermoformage et de décoration selon un premier mode de réalisation de l'invention ;
- la figure 2 est une vue schématique d'un procédé de thermoformage et de décoration selon un second mode de réalisation de l'invention ;
- la figure 3 est une vue schématique d'un dispositif de thermoformage et de décoration selon un premier mode de réalisation de l'invention ;
- la figure 4 est une vue schématique d'un dispositif de thermoformage et de décoration selon un second mode de réalisation de l'invention avec un module d'impression dans une première position d'impression ;
- la figure 5 est une vue schématique d'un dispositif de thermoformage et de décoration selon un troisième mode de réalisation de l'invention ;
- la figure 6 est une vue schématique d'un dispositif de thermoformage et de décoration selon un quatrième mode de réalisation de l'invention ;
- la figure 7 est une vue de dessus du module d'impression du dispositif de thermoformage de la figure 6,
- la figure 8 est une vue schématique du déplacement du module d'impression dans une zone d'impression, selon un mode de réalisation de l'invention ;
- la figure 9 illustre en vue de dessus la position relative de la zone d'impression, du moule et de la bande de matériau thermoformable dans un module de thermoformage selon un mode de réalisation particulier de l'invention ; et
- la figure 10 est une vue transversale partielle à plus grande échelle prise selon le plan transversal C-C de la figure 9, illustrant les moyens particuliers d'avance et de positionnement de la bande de matériau thermoformable dans le module de thermoformage.

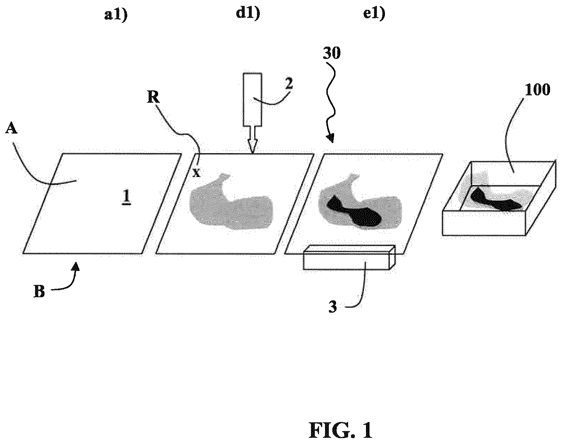

La figure 1 illustre schématiquement un procédé de thermoformage et de décoration selon un premier mode de réalisation de la présente invention.

Un tel procédé comprend les étapes suivantes :
- une étape d'approvisionnement a1),
- une étape d'impression d1), et
- une étape de thermoformage e1).

L'étape d'approvisionnement a1) consiste à fournir un matériau thermoformable 1 avec une face supérieure A et une face inférieure B sous forme de bande continue à partir d'un rouleau. Pour la fabrication de barquettes alimentaires 100, le matériau thermoformable utilisé est de façon avantageuse du polyéthylène téréphtalate (PET) ou du polyéthylène téréphtalate glycolisé (PETg) ou un composite PETg/PET/PETg en rouleau.

L'étape d'impression d1) consiste en l'impression d'une encre déposée par impression numérique à jet d'encre sur le matériau thermoformable selon un motif prédéfini.

Pour un résultat satisfaisant, il est avantageux que l'encre puisse être réticulée par un rayonnement ultraviolet (UV), et soit apte à présenter une capacité d'élongation d'au moins environ 50 % lors du thermoformage. Elle peut avantageusement être du type de l'encre commercialisée sous la référence ARF-207-C par la société ARDEJE.

L'encre choisie ne doit pas être transférée au moule de thermoformage, et doit tenir la température et la déformation du thermoformage.

L'encre est diffusée par une ou plusieurs têtes d'impression 2, chacune diffusant une couleur spécifique parmi le blanc, le rouge, le jaune, le bleu et le noir.

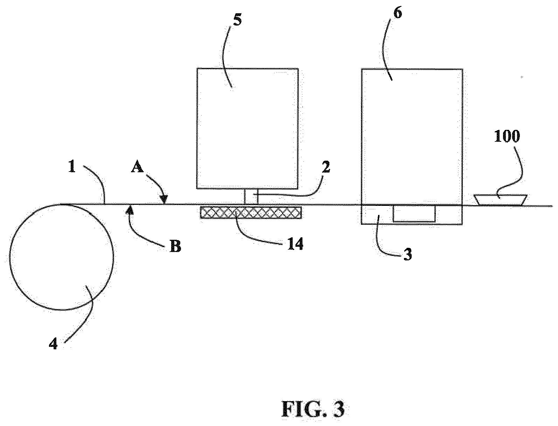

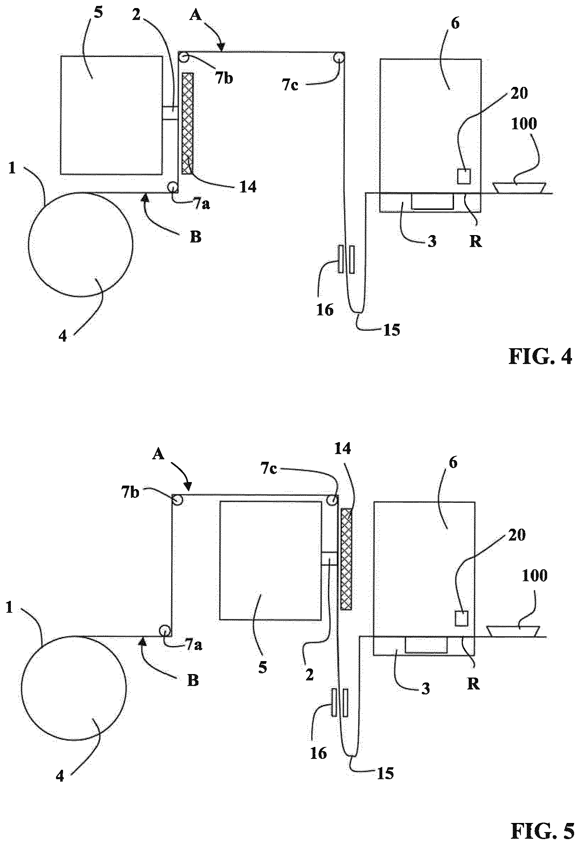

Comme illustré, les jets d'impression peuvent être verticaux dirigés vers le bas (figure 3), mais ils seront de préférence horizontaux (figures 4 à 6), ou encore obliques.

Dans la plupart des procédés de thermoformage de pièces de tailles courantes, on peut utiliser des moyens d'impression permettant une vitesse d'impression de l'ordre de 500 mm/s sans que cela ralentisse le procédé. Des moyens d'impression plus rapides pourraient également convenir, notamment pour des pièces de grandes surfaces. Il est alors possible de mettre en oeuvre le procédé sur une même bande continue de matériau thermoformable, depuis l'étape d'approvisionnement a1) jusqu'à l'étape de thermoformage e1), comme cela est illustré sur les figures 4 à 6.

Toutefois, lorsque l'étape de thermoformage e1) est nettement plus rapide que l'étape d'impression d1), il est plus avantageux de choisir un procédé en reprise dans lequel la bande de matériau thermoformable imprimée est enroulée sur une bobine en sortie de l'étape d'impression d1). La bande est ultérieurement déroulée de la bobine pour fournir le matériau thermoformable imprimé au module de thermoformage lors d'une étape ultérieure de thermoformage e1).

L'étape de thermoformage e1) consiste en un thermoformage classique comprenant le chauffage du matériau thermoformable 1 par un dispositif de chauffage 30, le positionnement et la mise en forme du matériau thermoformable 1 par application sous pression sur un moule 3.

Les moules de thermoformage peuvent être des moules positifs dans lesquels la forme est convexe, en protubérance, ou négatifs dans lesquels la forme est concave, en creux, placé en haut ou en bas.

Le produit fini obtenu est donc une barquette 100 décorée.

Pour assurer un positionnement correct du décor par rapport à une forme en volume du produit fini, il est avantageux de prévoir des moyens pour positionner de façon précise le matériau thermoformable 1 imprimé par rapport au moule 3 avant le formage.

Par exemple, on peut prévoir que l'étape d'impression d1) comprend l'impression d'un repère R (figure 1) sur le matériau thermoformable 1, repère qui sera ensuite détecté par un ou plusieurs capteurs appropriés 20 lors de l'étape de thermoformage e1) pour positionner correctement le matériau thermoformable 1 par rapport au moule 3.

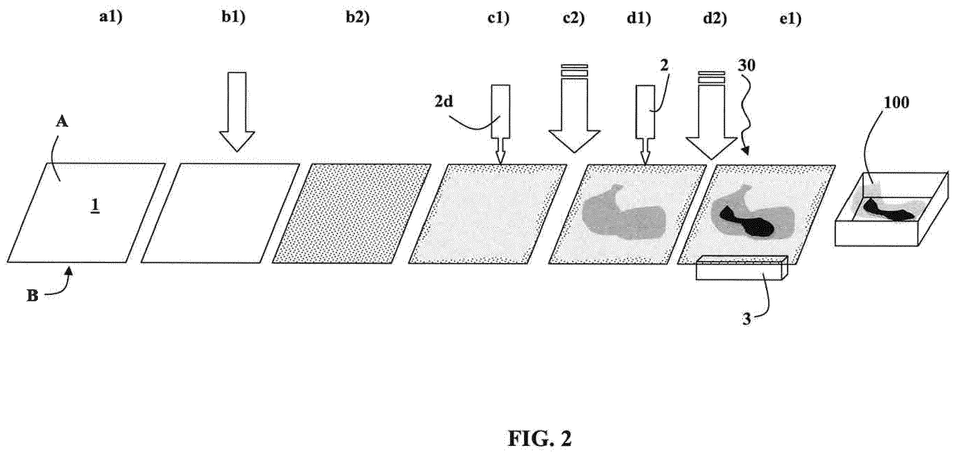

La figure 2 illustre schématiquement un procédé de thermoformage et de décoration selon un second mode de réalisation de l'invention. Ce mode de réalisation comprend les mêmes étapes que le premier mode de réalisation mais il comprend en outre des étapes complémentaires.

Ainsi, le procédé de thermoformage et de décoration selon le second mode de réalisation comprend les étapes suivantes :
- l'étape d'approvisionnement a1), comme dans le mode de réalisation de la figure 1,
- une étape de prétraitement b1) et/ou b2),
- une étape de préimpression c1),
- une première étape de réticulation c2),
- l'étape d'impression d1), comme dans le mode de réalisation de la figure 1,
- une seconde étape de réticulation d2), et
- l'étape de thermoformage e1), comme dans le mode de réalisation de la figure 1.

L'étape de prétraitement b1) vise à améliorer l'accroche de l'encre imprimée sur la surface de la face supérieure A du matériau thermoformable 1 et/ou sur la surface de la face inférieure B du matériau thermoformable 1, tel qu'illustré sur la figure 2, étape b2).

L'étape de préimpression c1) consiste à déposer une encre, avantageusement blanche, par au moins une tête d'impression 2d, sur le matériau thermoformable. Cette étape permet de faire mieux ressortir les couleurs qui seront déposées pendant l'étape d'impression d1).

L'étape de réticulation c2) est un traitement qui consiste à soumettre le matériau thermoformable à un rayonnement ultraviolet (UV) pour permettre la réticulation de l'encre. Cette réticulation permet que l'encre soit plus rapidement apte au thermoformage, et moins impactée par le thermoformage ultérieur.

La réticulation peut être adaptée par un choix approprié de puissance et de durée d'irradiation. Si l'encre est trop réticulée, sa capacité d'élongation risque d'être insuffisante et le motif imprimé risque de présenter des craquelures. Si l'encre n'est pas assez réticulée, l'encre risque d'être transférée au moule de thermoformage. Un compromis peut être recherché, par une réticulation incomplète, pour laquelle la puissance et la durée d'irradiation seront fonction de l'encre choisie et de l'épaisseur d'encre en sortie de tête d'impression.

En aval de l'étape d'impression d1), on prévoit une seconde étape de réticulation d2) pour les raisons évoquées ci-dessus, et la seconde réticulation peut être adaptée de manière similaire.

La figure 3 illustre un dispositif de thermoformage et de décoration selon un premier mode de réalisation de l'invention. Un tel dispositif comprend :
- un module d'approvisionnement 4 d'un matériau thermoformable 1 en bande à partir d'un rouleau,
- un module d'impression 5, et
- un module de thermoformage 6.

Le module d'approvisionnement 4 correspond à un module d'approvisionnement habituel des dispositifs de thermoformage. Le matériau thermoformable présente une face supérieure A à décorer et une face inférieure B.

Le module d'impression 5 comprend notamment une tête d'impression 2 adaptée pour diffuser une encre sur le matériau thermoformable selon un fichier numérique prédéfini. Avantageusement, cette encre doit pouvoir être réticulée par un rayonnement ultraviolet (UV), et doit être apte à présenter une capacité d'élongation d'au moins environ 50 % lors du thermoformage. Elle peut avantageusement être du type de l'encre commercialisée sous la référence ARF-207-C par la société ARDEJE.

Pour permettre l'impression, le matériau thermoformable 1 est bloqué momentanément en position fixe grâce à une table aspirante de positionnement et de blocage 14.

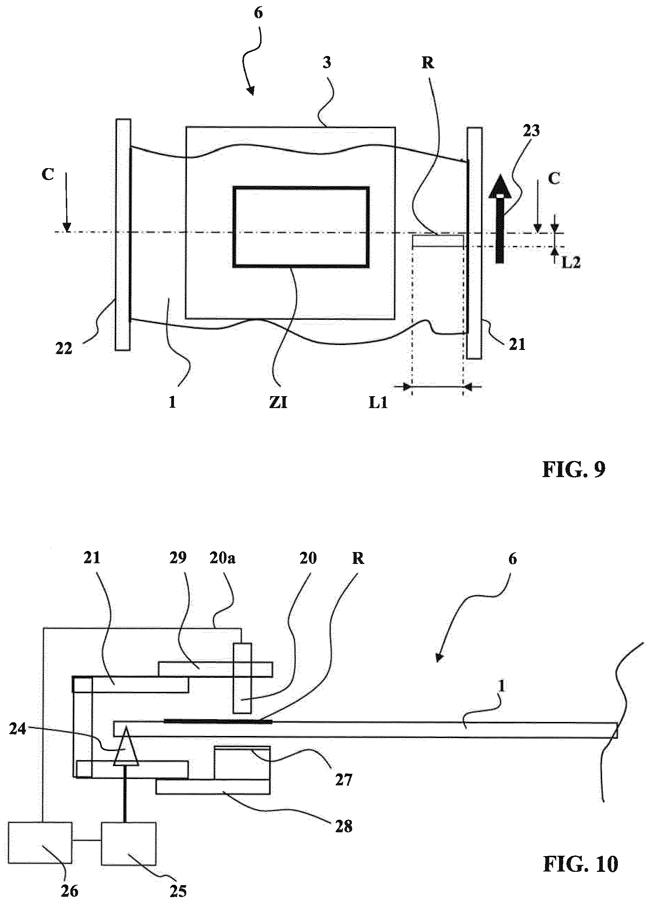

Le module de thermoformage 6 correspond à un module de thermoformage habituel des dispositifs de thermoformage. Il comporte lui-même des pinces d'entraînement (non représentées) et/ou des picots 24 (figure 10) engagés dans des trous de la bande de matériau thermoformable 1 et assurant le déplacement du matériau thermoformable 1 en aval des pinces d'entraînement ou picots 24.

Les pinces d'entraînement ou picots 24 du module de thermoformage 6 peuvent être entraînés par des moyens d'actionnement 25 (figure 9) tels qu'un moteur électrique lui-même piloté par un dispositif de commande 26 et un ou des capteurs de position 20 afin de placer correctement le repère imprimé R du matériau thermoformable 1 pour que la zone d'impression ZI et donc le décor imprimé soit en bonne position face au moule 3.

Dans le mode de réalisation illustré en figure 3, la tête d'impression 2 se déplace dans un plan horizontal.

Dans ce mode de réalisation, la cadence d'impression est la même que la cadence de thermoformage. Il n'y a donc pas nécessité de prévoir une zone tampon entre les moyens mettant en oeuvre l'étape d'impression et ceux mettant en oeuvre le thermoformage. Cela peut être le cas, par exemple, lorsque le décor a une surface nettement plus petite que la surface de l'objet à réaliser.

La figure 4 illustre un dispositif de thermoformage et de décoration selon un second mode de réalisation de l'invention. Les mêmes moyens essentiels sont repérés par les mêmes références numériques que sur la figure 3.

Toutefois, une fois le matériau thermoformable 1 imprimé, il poursuit son avance vers le module de thermoformage 6 en passant par une zone tampon 15 dans laquelle le matériau thermoformable 1 est guidé et entraîné par des pinces d'entraînement 16 qui pincent le matériau thermoformable 1 sans l'abîmer. Cette zone tampon 15 permet de compenser une différence des rythmes ou une désynchronisation de travail entre le module d'impression 5 et le module de thermoformage 6.

En pratique, ce sont les pinces d'entraînement 16, situées à l'entrée de la zone tampon 15, qui peuvent assurer le déplacement du matériau thermoformable 1 depuis le module d'approvisionnement 4 jusqu'à la zone tampon 15. Les picots 24 (figure 10) assurent le déplacement de la bande de matériau thermoformable 1 en aval de la zone tampon 15.

Dans ce second mode de réalisation, le dispositif comprend des moyens de guidage 7a, 7b et 7c par lesquels la bande de matériau thermoformable 1 est déplacée selon un tronçon ascendant puis selon un tronçon descendant. La tête d'impression 2 est agencée pour projeter l'encre contre le matériau thermoformable 1 dans le tronçon ascendant du trajet entre les moyens de guidage 7a et 7b. La tête d'impression 2 est pour cela déplacée par balayage horizontal et ascendant le long du tronçon ascendant. Cela limite l'encombrement global horizontal du dispositif de thermoformage et de décoration. La face supérieure A du matériau thermoformable 1 est celle qui est décorée dans le mode de réalisation illustré.

La figure 5 illustre un dispositif de thermoformage et de décoration selon un troisième mode de réalisation de l'invention. Les mêmes moyens essentiels sont repérés par les mêmes références numériques que sur la figure 3.

Dans ce troisième mode de réalisation, la tête d'impression 2 est agencée pour projeter l'encre contre le matériau thermoformable 1 dans le tronçon descendant entre les moyens de guidage 7c et la zone tampon 15. Cela limite également l'encombrement global horizontal du dispositif de thermoformage et de décoration. La face inférieure B du matériau thermoformable 1 est celle qui est décorée dans le mode de réalisation illustré.

Il est possible de passer de la configuration de la figure 4 à celle de la figure 5 par une simple translation horizontale du module d'impression 5. Il n'y a aucun besoin de rotation qui compliquerait nettement le déplacement.

Le dispositif de l'invention permet l'utilisation de tous types de moules de thermoformage 3. Ainsi, si le moule 3 est un moule négatif à surface de moulage orientée vers le haut, il conviendra d'effectuer l'impression dans la configuration de la figure 4, alors que si le moule 3 est un moule négatif à surface de moulage orientée vers le bas, il conviendra d'effectuer l'impression dans la configuration de la figure 5. Le changement de la configuration de la figure 4 à celle de la figure 5 est très simple puisqu'il ne nécessite que de simples translations de la tête d'impression. Le dispositif de l'invention est donc très flexible dans son utilisation.

Les configurations des figures 4 et 5 permettent de réaliser une impression sur une face pleine sans raccord.

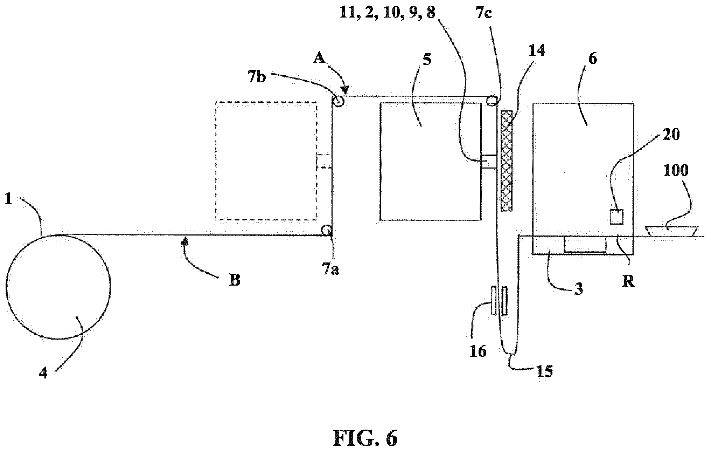

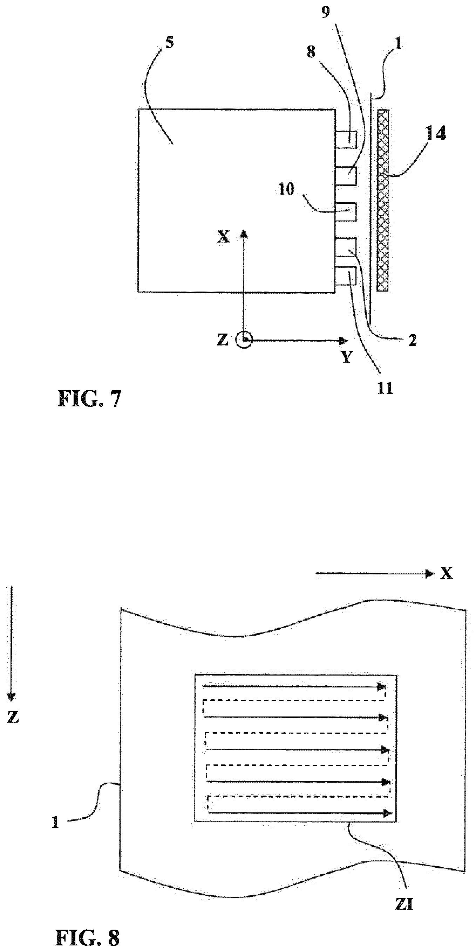

Le mode de réalisation des figures 6 et 7 est un dispositif de thermoformage et de décoration mettant en oeuvre le procédé de la figure 2. Les mêmes moyens essentiels sont repérés par les mêmes références numériques que sur les figures précédentes.

Le dispositif illustré comprend les moyens suivants :
- un module d'approvisionnement 4 d'un matériau thermoformable 1 en bande à partir d'un rouleau,
- un module d'impression 5 portant la ou les têtes d'impression 2,
- un module de prétraitement 8,
- un module de préimpression 9,
- un premier module de réticulation 10,
- un second module de réticulation 11, et
- un module de thermoformage 6.

Le module de prétraitement 8 permet de mettre en oeuvre un procédé permettant d'attaquer la surface A ou B du matériau thermoformable 1 pour améliorer l'accroche de l'encre sur cette surface.

Le module de préimpression 9 est apte à déposer une encre blanche sur la surface A de matériau thermoformable 1 à décorer. Afin d'améliorer la tenue de l'encre aux contraintes thermiques et mécaniques de thermoformage, on prévoit une étape de réticulation réalisée par le premier module de réticulation 10.

Le module d'impression 5 comporte habituellement quatre têtes d'impression 2, chacune contenant une encre différente (rouge, bleu, jaune ou noir), et imprime un motif selon un motif prédéfini.

La configuration de la figure 4, dans laquelle l'impression est réalisée sur la face A du matériau thermoformable est illustrée en pointillés.

On prévoit également, en aval du module d'impression 5, un second module de réticulation 11 pour les mêmes raisons que ci-dessus.

Sur ce mode de réalisation, comme illustré sur la figure 7, le module de prétraitement 8, le module de préimpression 9, le premier module de réticulation 10, la ou les têtes d'impression 2 et le second module de réticulation 11 sont solidaires du module d'impression 5, placés dans cet ordre les uns à la suite des autres dans le sens de balayage transversal X. L'encre est projetée sur la bande de matériau thermoformable 1 dans la direction horizontale illustrée par la flèche Y. Après un balayage transversal X complet, l'ensemble est déplacé par balayage longitudinal Z d'un pas, puis on exécute le balayage transversal X suivant, et on répète l'opération jusqu'à parcourir la zone d'impression ZI du matériau thermoformable 1, c'est-à-dire selon le tronçon descendant (position en traits pleins du module d'impression 5) ou selon le tronçon ascendant (position en pointillés du module d'impression 5). La figure 8 illustre en vue de côté le mouvement de balayage transversal X et longitudinal Z, selon lequel le module d'impression 5 est déplacé respectivement en direction perpendiculaire et en direction parallèle, par rapport à la direction d'avance du matériau thermoformable 1, face à la zone d'impression ZI.

Dans les modes de réalisation illustrés sur les figures 4 à 6, on a repéré schématiquement le ou les capteurs 20 qui permettent de détecter la position du ou des repères R sur la bande de matériau thermoformable 1, et de commander ainsi l'actionnement des moyens d'avance de la bande de matériau thermoformable pour placer correctement et de façon précise le décor par rapport au moule de thermoformage 3. De la sorte, le décor est placé correctement par rapport aux formes conférées à l'objet à réaliser 100.

Dans le mode de réalisation illustré plus en détails sur les figures 9 et 10, dans le module de thermoformage 6, la bande de matériau thermoformable 1 est guidée par un rail droit 21 et un rail gauche 22, entre lesquels elle se déplace dans un sens de déplacement illustré par la flèche 23.

La bande de matériau thermoformable 1 comprend pour cela, au voisinage de l'un au moins de ses bords latéraux, en l'espèce le bord droit, des trous dans lesquels s'engagent des picots 24 entraînés en translation dans le sens du déplacement 23 par des moyens d'entraînement 25 tels qu'un moteur électrique lui-même piloté par une commande électronique 26 en fonction de signaux reçus sur une ligne de commande 20a en provenance du ou des capteurs de position 20. Le ou les capteurs de position 20 sont tenus sur le rail droit 21 par un support de capteurs 29. De préférence, les capteurs de position 20 sont de type capteurs optiques, aptes à détecter la présence de repères R imprimés sur la bande de matériau thermoformable 1.

En face de la zone balayée par le capteur optique 20, de l'autre côté de la bande de matériau thermoformable 1, on dispose une plaque de fond 27 tenue par un support 28 sur le rail droit 21 et recouverte d'une couche superficielle de couleur blanche. Pour faire contraste avec la plaque de fond 27 blanche et avec les parties non imprimées de la bande de matériau thermoformable 1 généralement transparente ou translucide, le ou les repères R sont de préférence de couleur noire et opaques.

Dans le mode de réalisation illustré sur la figure 9, on utilise un repère R unique, de forme rectangulaire ayant une largeur L1 de 25 mm et une longueur L2 de 10 mm. Le repère R est positionné entre le rail droit 21 et le moule 3, de préférence à proximité du bord droit du moule 3 afin d'éviter les erreurs de positionnement dues à d'éventuelles déformations de la bande de matériau thermoformable 1.

Lors du fonctionnement, le dispositif de commande 26 actionne les moyens d'entraînement 25 et les picots 24 pour faire avancer la bande de matériau thermoformable 1, puis bloque les moyens d'entraînement 25 et les picots 24 lorsque le repère R imprimé sur la bande de matériau thermoformable 1 arrive sur une ligne C-C transversale dont la position est choisie par rapport au moule 3 du module de thermoformage 6, de façon que le décor réalisé sur la zone d'impression ZI se trouve correctement disposé par rapport au moule 3 du module de thermoformage 6 et que le décor se retrouve ensuite correctement positionné sur l'objet thermoformé 100 après l'étape de thermoformage.

Sans sortir du cadre de la présente invention, une zone tampon pourrait être prévue en sortie du module d'approvisionnement.

La présente invention n'est pas limitée aux modes de réalisation qui ont été explicitement décrits, mais elle en inclut les diverses variantes et généralisations contenues dans le domaine des revendications ci-après.

## Revendications

1. - Procédé de thermoformage et de décoration d'un matériau thermoformable (1) pour la réalisation d'un objet thermoformé (100) comportant un décor, comprenant :
- une étape d'approvisionnement a1) consistant à fournir le matériau thermoformable (1),
- une étape d'impression d1) consistant à réaliser une impression numérique par jet(s) d'encre sur une première face (A, B) du matériau thermoformable (1), après l'étape d'approvisionnement a1), l'encre étant adaptée pour être réticulée par irradiation d'ultraviolets (UV),
- une étape ultérieure de thermoformage e1) consistant à former à chaud le matériau thermoformable (1) imprimé,
**caractérisé en ce que** :
- lors de l'étape d'approvisionnement a1), le matériau thermoformable (1) est fourni sous forme d'une bande continue de matériau thermoformable,
- lors de l'étape d'impression c1), on retient immobile un tronçon de la bande de matériau thermoformable (1) comprenant une zone d'impression (ZI) destinée à porter la totalité du décor, et
- on projette au moins un jet d'encre en direction de la zone d'impression (ZI) sur la première face (A, B) du tronçon de bande de matériau thermoformable (1), en déplaçant le jet d'encre selon un balayage dans une première direction (X) et une seconde direction (Z), de façon à réaliser la totalité du décor.

2. - Procédé de thermoformage et de décoration selon la revendication 1, **caractérisé en ce que** la première direction (X) de balayage est transversale par rapport à la direction longitudinale dudit tronçon de bande de matériau thermoformable (1), et la seconde direction (Z) de balayage est longitudinale, parallèle à la direction longitudinale dudit tronçon de bande de matériau thermoformable (1).

3. - Procédé de thermoformage et de décoration selon l'une des revendications 1 ou 2, **caractérisé en ce que**, pour réaliser l'impression d'une zone d'impression (ZI) souhaitée du matériau thermoformable (1), après un balayage complet dans la première direction (X), ledit au moins un jet d'encre est déplacé par balayage d'un pas dans la seconde direction (Z), puis on exécute le balayage suivant dans la première direction (X), et on répète l'opération jusqu'à parcourir toute la zone d'impression (ZI) souhaitée du matériau thermoformable (1).

4. - Procédé de thermoformage et de décoration selon l'une quelconque des revendications 1 à 3, **caractérisé en ce qu'**il comprend en outre une étape de prétraitement b1) consistant à mettre en oeuvre un traitement Corona ou un traitement par plasma atmosphérique sur ladite première face (A, B) de la bande de matériau thermoformable (1), après l'étape d'approvisionnement a1) et avant l'étape d'impression d1).

5. - Procédé de thermoformage et de décoration selon l'une quelconque des revendications 1 à 4, **caractérisé en ce qu'**il comprend en outre une étape de préimpression c1) consistant à imprimer du blanc ou une couleur unique sur ladite première face (A, B) de la bande de matériau thermoformable (1), avant l'étape d'impression d1).

6. - Procédé de thermoformage et de décoration selon la revendication 5, **caractérisé en ce qu'**il comprend en outre une première étape de réticulation c2) consistant à réticuler l'encre déposée sur ladite première face (A, B) du matériau thermoformable (1), entre l'étape de préimpression c1) et l'étape d'impression d1).

7. - Procédé de thermoformage et de décoration selon l'une quelconque des revendications 1 à 6, **caractérisé en ce qu'**il comprend en outre une seconde étape de réticulation d2) consistant à réticuler l'encre déposée sur la bande de matériau thermoformable (1), entre l'étape d'impression d1) et l'étape de thermoformage e1).

8. - Procédé de thermoformage et de décoration selon l'une quelconque des revendications 1 à 7, **caractérisé en ce que** :
- pendant l'étape d'impression d1), le tronçon de bande de matériau thermoformable (1) comprenant la zone d'impression (ZI) est orienté selon une direction ascendante ou descendante,
- pendant l'étape d'impression d1), on projette l'encre contre la zone d'impression (ZI) dudit tronçon de bande de matériau thermoformable (1) bloqué momentanément en position fixe.

9. - Procédé de thermoformage et de décoration selon l'une quelconque des revendications 1 à 8, **caractérisé en ce que**, pendant l'étape d'impression d1), on imprime en outre sur la bande de matériau thermoformable (1) un ou plusieurs repères (R) dont la position relative est définie par rapport à la zone d'impression (ZI).

10. - Procédé de thermoformage et de décoration selon l'une quelconque des revendications 1 à 9, **caractérisé en ce que**, pendant l'étape ultérieure de thermoformage e1), pour positionner dans un module de thermoformage (6) le tronçon de bande de matériau thermoformable (1) comprenant la zone d'impression (ZI), on place dans le module de thermoformage (6) lesdits un ou plusieurs repères (R) dont la position relative est définie par rapport à la zone d'impression (ZI).

11. - Dispositif de thermoformage et de décoration d'un matériau thermoformable (1), comprenant :
- un module d'approvisionnement (4) de matériau thermoformable (1), pour délivrer une bande du matériau thermoformable (1),
- un module de thermoformage (6) adapté pour thermoformer des tronçons de la bande de matériau thermoformable (1),
- entre le module d'approvisionnement (4) et le module de thermoformage (6), un module d'impression (5) numérique par jet d'encre conformé pour projeter de l'encre sur une zone d'impression (ZI) d'une première face (A, B) d'un tronçon de la bande de matériau thermoformable (1), avant son thermoformage, l'encre étant adaptée pour être réticulée par irradiation d'ultraviolets (UV),
**caractérisé en ce qu'**il comprend :
- des moyens de blocage (14) pour maintenir immobile, pendant une étape d'impression d1), ledit tronçon de bande de matériau thermoformable (1),
- des moyens de balayage pour déplacer le module d'impression (5) numérique selon un balayage en deux directions (X, Z) définissant une zone d'impression (ZI) sur le tronçon de bande de matériau thermoformable (1).

12. - Dispositif de thermoformage et de décoration selon la revendication 11, **caractérisé en ce que** le module d'impression (5) comprend quatre têtes d'impression (2) par jet d'encre, chacune étant conformée pour imprimer du blanc ou une couleur sur une première face (A, B) du matériau thermoformable (1).

13. - Dispositif de thermoformage et de décoration selon l'une des revendications 11 ou 12, **caractérisé en ce qu'**il comprend en outre, en amont du module d'impression (5) et en aval du module d'approvisionnement (4) de matériau thermoformable (1), un module de prétraitement (8) adapté pour préparer la surface de ladite première face (A, B) du matériau thermoformable (1) par un traitement Corona ou un traitement par plasma atmosphérique appliqué sur ladite première face (A, B) du matériau thermoformable (1).

14. - Dispositif de thermoformage et de décoration selon l'une quelconque des revendications 11 à 13, **caractérisé en ce qu'**il est conformé pour déplacer et bloquer la bande de matériau thermoformable (1) selon au moins un tronçon ascendant ou descendant, le module d'impression (5) projetant l'encre contre ladite première face (A, B) dudit tronçon de bande de matériau thermoformable (1) bloqué momentanément en position fixe.

15. - Dispositif de thermoformage et de décoration selon l'une quelconque des revendications 11 à 14, **caractérisé en ce que** le module de thermoformage (6) comprend un ou plusieurs capteurs de position (20) pour détecter la position du ou des repères (R) de la zone d'impression (ZI) sur la bande de matériau thermoformable (1), et des moyens (24-26) pour positionner dans le moule de thermoformage (6) le tronçon de bande de matériau thermoformable (1) comportant ladite zone d'impression (ZI) en fonction des informations fournies par le ou les capteurs de position (20).
